# EUROPÄISCHE PATENTSCHRIFT

(11) **EP 2 703 655 B1**
(45) Veröffentlichungstag und Bekanntmachung des Hinweises auf die Patenterteilung: **09.11.2016**
(21) Anmeldenummer: 13450038.8
(22) Anmeldetag: 28.08.2013
(51) Int. Cl.: F16B 12/12, F16B 12/20

(54) **Vorrichtung zur Anordnung an einem Holzbauteil**
Device for assembly on a wooden component
Dispositif d'agencement sur un élément de bois

(30) Priorität: 30.08.2012 AT 9492012
(43) Veröffentlichungstag der Anmeldung: 05.03.2014
(73) Patentinhaber: VH Holding GmbH, 8130 Frohnleiten (AT)
(72) Erfinder: Harrer, Vinzenz, AT-8162 Passail (AT)
(74) Vertreter: Gibler & Poth Patentanwälte KG

(56) Entgegenhaltungen:
- DE-A1- 1 528 345
- FR-A- 1 283 917
- FR-A1- 2 627 820

## Beschreibung

Die Erfindung betrifft eine Vorrichtung zur Anordnung an einem Holzbauteil gemäß dem Oberbegriff des Patentanspruches 1.

Es sind Vorrichtung zur Anordnung an einem Holzbauteil bekannt, welche an einen Holzbauteil angeschraubt werden, und dabei mit einer Fläche an einer Fläche des Holzbauteils anliegen, und auf die Vorrichtung einwirkende Kräfte auf den Holzbauteil übertragen.

Derartige Vorrichtungen sind insbesondere als Verbindungsvorrichtung zum Verbinden zweier Holzbauteile ausgebildet.

Die DE 1 528 345 beschreibt eine Verbindungsleiste zur Verbindung zweier zu verleimender Holzteile, insbesondere zum Verbinden sehr dünner Holzteile. Die Durchbrechungen dienen dazu sog. Leimbrücken zu bilden, bei der Verleimung der Verbindungsleiste.

Die FR 2 627 820 A1 beschreibt einen Holzverbinder, welcher vorspringende Zacken aufweist, welche sich in das Holz graben. Die FR 2 627 820 A1 zeigt als Anwendungsfall die Herstellung eines T- bzw. I-Trägers.

Die FR 1 283 917 A beschreibt eine, aus zwei Teilen bestehende Nut-Feder-artigen lösbaren Steckverbindung, welche mittels Schrauben an Holzteilen befestigt sind.

Es hat sich gezeigt, dass die Tragfähigkeit derartiger Vorrichtung begrenzt ist.

Aufgabe der Erfindung ist es daher eine Vorrichtung zur Anordnung an einem Holzbauteil der eingangs genannten Art anzugeben, mit welchem die genannten Nachteile vermieden werden können, mit welchem die Tragfähigkeit entsprechender Vorrichtung erhöht werden kann.

Erfindungsgemäß wird dies durch die Merkmale des Patentanspruches 1 erreicht.

Dadurch kann die Tragfähigkeit entsprechender Vorrichtungen erheblich erhöht werden, ohne hiefür die Geometrie der Vorrichtung selbst verändern zu müssen. Dadurch ist eine Erhöhung der Tragfähigkeit mit geringen Kosten möglich, da lediglich eine Oberfläche an der ersten Seite entsprechend bearbeitet werden muss.

Die Unteransprüche betreffen weitere vorteilhafte Ausgestaltungen der Erfindung. Ausdrücklich wird hiermit auf den Wortlaut der Ansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine erste bevorzugte Ausbildung einer gegenständlichen Vorrichtung als erstes Verbindungselement einer ersten Ausführungsform einer Steckverbindung im Auf- und Seitenriss;
Fig. 2 eine zweite bevorzugte Ausbildung einer gegenständlichen Vorrichtung als zweites Verbindungselement der Steckverbindung gemäß Fig. 1 im Auf- und Seitenriss;
Fig. 3 eine dritte bevorzugte Ausbildung einer gegenständlichen Vorrichtung als erstes Verbindungselement einer zweiten Ausführungsform einer Steckverbindung im Auf- und Seitenriss;
Fig. 4 eine vierte bevorzugte Ausbildung einer gegenständlichen Vorrichtung als zweites Verbindungselement der Steckverbindung gemäß Fig. 3 im Auf- und Seitenriss; und
Fig. 5 Detail A gemäß Fig. 4.

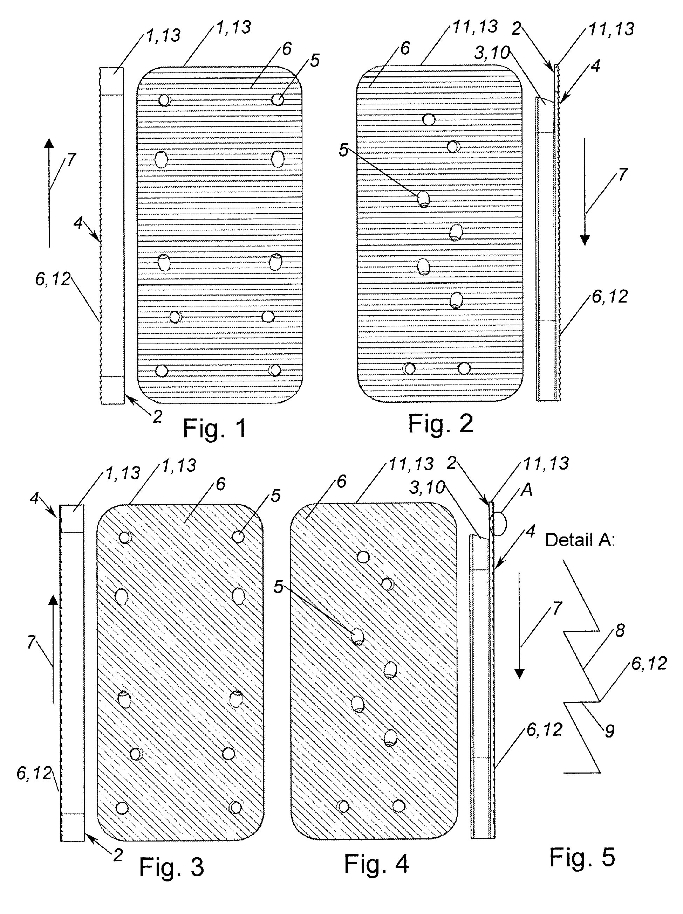

Die Fig. 1 bis 4 zeigen Vorrichtungen 13 zur Anordnung an einem Holzbauteil, wobei die Vorrichtung 13 eine erste Seite 4 aufweist, welche erste Seite 4 zum Kontakt mit dem Holzbauteil vorgesehen ist, und wobei die Vorrichtung 13 weiters eine vorgebbare Mehrzahl an Durchbrechungen 5 aufweist, wobei die erste Seite 4 eine Vielzahl vorstehender Eindringelemente 12 aufweist, welche derart ausgebildet sind, dass diese - bei Befestigung des Verbindungselements 13 an einem Holzbauteil - in den Holzbauteil eindringen, zur Bildung einer formschlüssigen Verbindung zwischen der Vorrichtung 13 und dem Holzbauteil.

Dadurch kann die Tragfähigkeit entsprechender Vorrichtungen 13 erheblich erhöht werden, ohne hiefür die Geometrie der Vorrichtung 13 selbst verändern zu müssen. Dadurch ist eine Erhöhung der Tragfähigkeit mit geringen Kosten möglich, da lediglich eine Oberfläche an der ersten Seite 4 entsprechend bearbeitet werden muss.

Durch die gegenständliche Ausbildung der Vorrichtung 13 können vor allem Holzverbindungen zwischen schweren Holzbauteilen, etwa Holzträgern einer Gebäudedeckenkonstruktion, einfach hergestellt werden, da die Einzelteile jeweils vor der tatsächlichen Herstellung der Holzverbindung an den einzelnen Holzbauteilen angebracht werden können, wobei dann das Zusammenfügen derselben auf der Baustelle sehr schnell erfolgen kann, wobei es nicht erforderlich ist einen schweren Holzträger lange in einer schwebenden Position zu halten. Zudem ist die Verbindung selbst wieder lösbar.

Bei der gegenständlichen Vorrichtung 13 zur Anordnung an einem Holzbauteil kann es sich um jede Art einer entsprechenden Vorrichtung 13 handeln, welche dazu vorgesehen ist mittels Befestigungselementen, welche durch die Durchbrechungen 5 greifen, mit dem Holzbauteil verbunden zu werden, etwa um eine Konsole. Bevorzugt ist vorgesehen, dass die Vorrichtung 13 als Verbindungsvorrichtung zum Verbinden zweier Holzbauteile ausgebildet ist, insbesondere als Schlitzblech oder Balkenschuh. Dadurch können die positiven Auswirkungen der gegenständlichen Erfindung auf die besonders belasteten Teile einer Holzverbindung angewandt werden.

Erfindungsgemäß ist vorgesehen, dass die Vorrichtung 13 als Verbindungselement 1, 11 einer Nut-Feder-artigen lösbaren Steckverbindung ausgebildet ist, wobei das Verbindungselement 1, 11 an einer zweiten Seite 2 einen Steckverbindungsteil 3 aufweist.

Derartige Verbindungselemente 1, 11 sind gegengleich ausgebildet. Ein erstes Verbindungselement 1 der Steckverbindung weist eine hinterschnittene Nut auf, und ein anderes, zweites Verbindungselement 11 eine entsprechend gegengteiche Feder. Die beiden Verbindungselemente 1, 11 werden dabei jeweils an Holzbauteilen befestigt, etwa angeschraubt, wodurch eine sichere und lösbare Steckverbindungen der beiden Holzbauteile möglich ist.

Bei derartigen Verbindungselementen 1, 11 handelt es sich um hoch belastbare Bauteile, welche eine, bezüglich deren Kraftübertragungsfähigkeit, kleine Fläche an der ersten Seite 4 aufweisen. Durch die erfindungsgemäße Ausbildung der ersten Seite 4 kann die Tragfähigkeit der gesamten Steckverbindung erhöht werden.

Nachfolgend wie die Erfindung anhand der erfindungsgemäßen Ausbildung der gegenständlichen Vorrichtung 13 zur Anordnung an einem Holzbauteil als Verbindungselemente 1, 11 einer Nut-Feder-artigen lösbaren Steckverbindung im Detail beschrieben.

Die Fig. 1 bis 4 zeigen Verbindungselemente 1, 11 einer Nut-Feder-artigen lösbaren Steckverbindung, wobei das Verbindungselement 1, 11 an einer zweiten Seite 2 einen Steckverbindungsteil 3 aufweist, und wobei eine erste Seite 4 zum Kontakt mit dem Holzbauteil vorgesehen ist, wobei das Verbindungselement 1, 11 weiters eine vorgebbare Mehrzahl an Durchbrechungen 5 aufweist, wobei die erste Seite 4 eine Vielzahl vorstehender Eindringelemente 12 aufweist, welche derart ausgebildet sind, dass diese - bei Befestigung des Verbindungselements 1 an einem Holzbauteil - in den Holzbauteil eindringen, zur Bildung einer formschlüssigen Verbindung. Dadurch kann die Tragfähigkeit entsprechender Steckverbindungen erheblich erhöht werden, ohne hiefür die Geometrie der Nut bzw. der Feder 10 verändern zu müssen. Dadurch ist eine Erhöhung der Tragfähigkeit mit geringen Kosten möglich, da lediglich eine Oberfläche an der zweiten Seite 4 entsprechend bearbeitet werden muss.

Die Fig. 1 und 3 zeigen jeweils ein erstes Verbindungselement 1 einer Nut-Feder-artigen lösbaren Steckverbindung. Die Fig. 2 und 4 zeigen jeweils ein zweites Verbindungselement 11 einer Nut-Feder-artigen lösbaren Steckverbindung. Die beiden unterschiedlich ausgebildeten ersten bzw. zweiten Verbindungselemente 1, 11 unterscheiden sich hinsichtlich der Ausbildung der ersten Seite 4. Einleitend werden die Gemeinsamkeiten der betreffenden ersten bzw. zweiten Verbindungselemente 1, 11 hinsichtlich der Nut-Feder-artigen lösbaren Steckverbindung beschrieben.

Die zweiten Verbindungselemente 11 weisen als Steckverbindungsteil 3 jeweils wenigstens eine Feder 10 auf, welche an der sog. zweiten Seite 2 der betreffenden Bauteile angeordnet ist. Als Feder 10 ist dabei der in Fig. 2 bzw. 4 dargestellte vorspringende Bereich bezeichnet. Dieser weist eine deutliche Längserstreckung auf, und ist dazu vorgesehen in eine gegengleiche Aufnahme, welche als Nut bezeichnet ist eingeführt zu werden.

Die Feder 10 weist an deren umfänglichen Steg eine Hinterscheidung auf, welche etwa am - in Ansicht der Darstellungen - oberen Bereich gut erkennbar ist. Die Feder 10 weist weiters einen abgerundeten Einführbereich auf, um das Einführen der Feder 10 in eine Nut zu vereinfachen. Zudem weist die Feder 10 einen sich erweiternden Bereich auf, wodurch eine gute Lastübertragung in der Hauptbelastungsrichtung gegeben ist, sowie eine selbstzentrierende Wirkung, welche für einen wackelfreien Sitz der Steckverbindung sorgt.

Die ersten Verbindungselemente 1 weisen als Steckverbindungsteil 3 jeweils wenigstens eine Nut auf, welche an der sog. ersten Seite 2 der betreffenden Bauteile angeordnet ist. Diese ist in den Fig. 1 bis 3 nicht dargestellt, da sich diese in den Darstellungen nicht ersichtlich im Inneren der betreffenden Bauteile befindet. Die Nut ist als längliche, an einer Stirnseite offene Aufnahme ausgebildet, und ist entsprechend gegengleich einer Feder 10 eines entsprechend korrespondierenden zweiten Verbindungselements 11 ausgebildet. Daher ist gemäß den dargestellten bevorzugten Ausführungsformen vorgesehen, dass die Nut eine entsprechende Hinterscheidung aufweist.

Die beschriebe Nut-Feder-artige lösbare Steckverbindung ist dazu vorgesehen durch ineinanderschieben der beiden Verbindungselemente 1, 11 gebildet zu werden. Diese ist geeignet, Kräfte in allen Richtungen aufzunehmen, außer derjenigen, welche zum Auftrennen der Nut-Feder-artigen lösbaren Steckverbindung führt. Die Nut-Feder-artige lösbare Steckverbindung weist dabei eine sog. Hauptbelastungsrichtung 7 auf, welche mit der Längserstreckung der Nut bzw. Feder 10 übereinstimmt.

Es ist bevorzugt vorgesehen, dass die Befestigung des Verbindungselements 13 an einem Holzbauteil derart erfolgt, dass das Verbindungselement mit der ersten Seite 4 an den Holzbauteil angelegt wird, und nachfolgend mittels Befestigungsmitteln, etwa Schrauben, welche in den Durchbrechungen 5 angeordnet werden, an dem Holzbauteil befestigt wird. Während dieses Befestigungsvorganges werden dabei die Eindringelemente 12 in die Oberfläche des Holzbauteils eingedrückt bzw. eingepresst, wobei eine formschlüssige Verbindung gebildet wird. Es ist daher vorgesehen, dass die Befestigung des Verbindungselements 13 vorzugsweise im Wesentlichen normal auf die Hauptbelastungsrichtung 7 erfolgt und/oder, dass sich die Eindringelemente 12 in eine Richtung erstrecken bzw. aus der ersten Oberfläche erheben, welche Richtung im Wesentlichen normal auf die Hauptbelastungsrichtung 7 angeordnet ist.

Neben den beschriebenen Ausführungen eines Nut-Feder-Systems können auch andere Ausgestaltungen von Nut und Feder 10 vorgesehen sein.

Jedes der Verbindungselemente 1, 11 weist weiters eine vorgebbare Mehrzahl an Durchbrechungen 5 auf. Diese sind zur Aufnahme von Befestigungsmitteln, insbesondere Schrauben, vorgesehen, und dienen zur Befestigung der Verbindungselemente 1, 11 an Holzteilen, insbesondere Holzträgern im Bereich des Holzbaus. Mittels der durch die Befestigungsmittel aufgebrachten Kraft werden die Verbindungselemente 1, 11 an die Holzteile gepresst.

Die Verbindungselemente 1, 11 weisen weiters eine erste Seite 4 auf, welche erfindungsgemäß eine im Wesentlichen ebene bzw. plane Grundform aufweisen, deren Oberfläche wie weiters erläutert strukturiert ist. Ebene bzw. plane Grundform bedeutet in diesem Zusammenhang insbesondere, dass die obersten Erhebungen der Eindringelemente 12 im Wesentlichen eine ebene Fläche aufspannen.

Durch erfindungsgemäße Verbindungselemente 1, 11 können einfach und schnell Holzbauwerke gebildet werden. Die jeweiligen Verbindungselemente 1, 11 werden dabei bereits in einem vorbereitenden Schritt auf die Holzteile montiert, welche nachfolgen lediglich zusammengesteckt werden müssen. Es hat sich gezeigt, dass die Tragfähigkeit derartig gebildeter Holzbauwerke im Wesentlichen durch den Bereich der Anbindung der Verbindungselemente 1, 11 an die Holzteile limitiert sind.

Dabei hat es sich als besonders vorteilhaft zur Verbesserung der Tragfähigkeit der gesamten Steckverbindung erwiesen, wenn die erste Seite 4 eine Vielzahl vorstehender Eindringelemente 12 aufweist, welche derart ausgebildet sind, dass diese - bei Befestigung des Verbindungselements 1, 11 an einem Holzbauteil - in den Holzteil eindringen, zur Bildung einer formschlüssigen Verbindung zwischen dem Verbindungselement 1, 11 und dem Holzteil. Die Eindringelemente 12 sind daher zur Bildung einer formschlüssigen Verbindung unter den besagten Umständen ausgebildet. Dabei "graben" sich die Eindringelemente 12 in die Holzoberfläche, bzw. werden in diese hinein gedrückt.

Durch die Ausbildung einer formschlüssigen Verbindung konnte eine überraschend starke Steigerung der Tragfähigkeit bzw. Belastbarkeit erzielt werden, gegenüber einer bloßen Erhöhung von Reibwerten der Oberfläche an der ersten Seite 4 oder einer Erhöhung der Anpresskraft über die Befestigungsmittel.

Bei den Eindringelementen 12 kann es sich um jede Art entsprechender Erhebungen handeln, welche eine entsprechende Höhe aufweisen, sowie eine entsprechend hohe Flächenbelastung, um ein Eindringen in eine Holzoberfläche zu ermöglichen.

Bevorzugt ist vorgesehen, dass die Eindringelemente 12 im Wesentlichen regelmäßig an der ersten Seite 4 angeordnet sind. Dadurch wird eine einfache Herstellbarkeit unterstützt, sowie eine gleichmäßige Kraftübertragung über die gesamte Fläche der zweiten Seite 4. Regelmäßig bedeutet dabei bevorzugt, dass die Abstände zwischen den Eindringelementen 12 im Wesentlichen konstant sind. Insbesondere kann dabei vorgesehen sein, dass die Verteilung zufolge einer periodischen mathematischen Funktion erfolgt. Die Regelmäßigkeit der Anordnung sowie die Höhe bzw. Amplitude der Eindringelemente 12 unterscheidet diese dabei auch deutlich von herkömmlicher Oberflächenrauigkeit, welche unregelmäßig ist. Zudem haben Versuche ergeben, dass eine Erhöhung der Oberflächenrauigkeit nicht zu dem selben Ergebnis der Erhöhung der Tragfähigkeit der gesamten Steckverbindung führt.

Es hat sich als Vorteilhaft erwiesen, dass die Eindringelemente 12 scharfkantig ausgebildet sind, wodurch diese ein gutes Eindringverhalten in die Holzteile aufweisen. Es können aber stoppelförmige Strukturen vorgesehen sein, welche sich stiftartig in den Holzteil bohren. Dabei kann etwa vorgesehen sein, dass die erste Seite 4 eine Vielzahl zylindrischer, pyramidenförmiger oder kegelförmiger Erhebungen aufweist.

Bevorzugt ist vorgesehen, dass die Eindringelemente 12 als Spitzen und/oder Keile 6 ausgebildet sind. Spitzen bzw. Keile 6 weisen an dem Bereich der in das Holz eindringen soll, eine vorteilhaft geringe, im mathematischen Ideal gegen Null gehende, Auflagefläche auf, und dringen dadurch gut in das Holz ein. Zudem weisen diese Formen flache Seitenwände auf. Dadurch pressen sich diese - insbesondere bei der Anordnung der Verbindungselemente 1, 11 an Hirnholz in die Faserstruktur des Holzes ohne diese zu zerstören. Dadurch kann eine gute Anbindung an die "inneren Zugelemente" des Holzteils erreicht werden. Dadurch kann die Kraftübertragung in die tragenden Holzfasern verbessert werden. Dies ist etwa bei den gegenständlich als vorteilhaft beschriebenen Ausführungen der Fall.

Erfindungsgemäß ist vorgesehen, dass die Eindringelemente 12, insbesondere die Spitzen und/oder Keile 6, zufolge einer periodischen Sägezahn oder Dreiecksfunktion verteilt sind, wodurch eine gute Eindringwirkung an den Holzteilen erzielt werden kann. Dadurch kann weiters eine gute und gleichmäßige Kraftübertragung an den Kontaktstellen zum Holzteil erreicht werden, wobei insbesondere ein Ausreißen der Holzoberfläche in diesem Bereich vermieden wird. Besonders bevorzugt ist die Ausbildung der Eindringelemente 12, insbesondere die Spitzen und/oder Keile 6, zufolge einer Dreiecksfunktion, wobei insbesondere vorgesehen ist, dass die Spitzen und/oder Keile 6, in Hauptbelastungsrichtung 7 Schenkel 8, 9 unterschiedlicher Länge aufweisen, wobei eine gute Krafteinleitung in bestimmte vorgebbare Belastungsrichtungen erzielt werden kann.

Dadurch, dass in Hauptbelastungsrichtung 7 der erste Schenkel 8 einer Spitze und/oder Keils 6 länger ist als die nachfolgende zweite Schenkel 9 derselben Spitze bzw. Keils 6, kann eine besonders wirkungsvolle Kraftübertragung von dem Verbindungselement 1, 11 in den Holzteil erzielt werden. Insbesondere ist dabei vorgesehen, dass der zweite Schenkel 9 im Wesentlichen normal auf die erste Seite 4 angeordnet ist. Dies entspricht im Wesentlichen einer Sägezahnfunktion. Fig. 5 zeigt ein Detail aus Fig. 4, wobei gut die sägezahnförmige Ausbildung dargestellt ist. Der zweite Schenkel 9 ist dabei im Wesentlichen normal auf die nicht dargestellte erste Seite 4 angeordnet.

In den Fig. 1 bis 4 sind jeweils lediglich rillenförmige Strukturen der Anordnung von als Keile 6 ausgebildeten Eindringelementen 12 dargestellt, wobei die Keile 6 an deren oberen Ende eine Kante aufweisen. Es können darüber hinaus auch andere Anordnungen vorgesehen sein, insbesondere mehrere ineinander verschachtelte rillenförmige Strukturen mit unterschiedlichem Winkel, etwa in der Art einer Einhiebfeile bzw. Doppelhiebfeile. Aber auch Strukturen wie bei einer Raspel können vorgesehen sein.

Bevorzugt ist vorgesehen, dass die Eindringelemente 12 in einem Winkel zwischen 45° und 90° zur Hauptbelastungsrichtung 7 angeordnet sind. Bei der ersten Ausführungsform einer Steckverbindung gemäß den Fig. 1 und 2 sind die entsprechenden Keile 6 in einem Winkel von etwa 90° zur Hauptbelastungsrichtung 7 angeordnet. Bei der zweiten Ausführungsform einer Steckverbindung gemäß den

Fig. 3 und 4 sind die entsprechenden Keile 6 in einem Winkel von etwa 45° zur Hauptbelastungsrichtung 7 angeordnet. Durch die unterschiedliche Anordnung der Spitzen und/oder Keile 6 zur Hauptbelastungsrichtung 7 können unterschiedliche Verbindungselemente 1 gebildet werden, welche jeweils für einen bestimmten Anwendungsfall angepasst eingesetzt werden können.

Bevorzugt ist vorgesehen, dass die gesamte erste Seite 4 Eindringelemente 12 aufweist, es kann aber auch vorgesehen sein, dass lediglich ein Teilbereich bzw. nicht zusammenhängende Teilbereiche der ersten Seite 4 die Eindringelemente 12 aufweisen.

Zur weiteren Steigerung der Tragfähigkeit kann vorgesehen sein, die erste Seite 4 mit einem Klebstoff zu versehen, bevor diese auf dem Holzbauteil angeordnet wird.

## Patentansprüche

1. Vorrichtung (13) zur Anordnung an einem Holzbauteil, wobei die Vorrichtung (13) eine erste Seite (4) aufweist, welche erste Seite (4) zum Kontakt mit dem Holzbauteil vorgesehen ist, und wobei die Vorrichtung (13) weiters eine vorgebbare Mehrzahl an Durchbrechungen (5) aufweist, wobei die Vorrichtung (13) als Verbindungselement (1, 11) einer Nut-Feder-artigen lösbaren Steckverbindung ausgebildet ist, wobei das Verbindungselement (1, 11) an einer zweiten Seite (2) einen Steckverbindungsteil (3) aufweist, **dadurch gekennzeichnet, dass** die erste Seite (4) eine im Wesentlichen ebene bzw. plane Grundform aufweist, deren Oberfläche eine Vielzahl vorstehender Eindringelemente (12) aufweist, welche derart ausgebildet sind, dass diese - bei Befestigung des Verbindungselements (13) an einem Holzbauteil - in den Holzbauteil eindringen, zur Bildung einer formschlüssigen Verbindung, und dass die Eindringelemente (12) zufolge einer periodischen Sägezahn oder Dreiecksfunktion ausgebildet sind.

2. Vorrichtung (13) nach Anspruch 1, **dadurch gekennzeichnet, dass** die Eindringelemente (12) als Spitzen und/oder Keile (6) ausgebildet sind.

3. Vorrichtung (13) nach Anspruch 1 oder 2, **dadurch gekennzeichnet, dass** die Vorrichtung (13) eine Hauptbelastungsrichtung (7) aufweist, und dass die Eindringelemente (12) in einem Winkel zwischen 45° und 90° zur Hauptbelastungsrichtung (7) angeordnet sind.

4. Vorrichtung (13) nach Anspruch 1, 2 oder 3, **dadurch gekennzeichnet, dass** die Eindringelemente (12) in Hauptbelastungsrichtung (7) Schenkel (8, 9) unterschiedlicher Länge aufweisen.

5. Vorrichtung (13) nach Anspruch 3 oder 4, **dadurch gekennzeichnet, dass** in Hauptbelastungsrichtung (7) der erste Schenkel (8) einer Spitze und/oder Kante (6) länger ist als die nachfolgende zweite Schenkel (9) derselben Spitze bzw. Kante (6).

6. Vorrichtung (13) nach einem der Ansprüche 1 bis 5, **dadurch gekennzeichnet, dass** die erste Seite (4) eine im Wesentlichen plane Grundform aufweist, aus welcher sich die Eindringelemente (12) erheben.

7. Vorrichtung (13) nach einem der Ansprüche 1 bis 6, **dadurch gekennzeichnet, dass** die Eindringelemente (12) scharfkantig ausgebildet sind.

8. Vorrichtung (13) nach einem der Ansprüche 1 bis 7, **dadurch gekennzeichnet, dass** die Eindringelemente (12) im Wesentlichen regelmäßig an der erste Seite (4) angeordnet sind.

## Claims

1. An apparatus (13) for arrangement on a wooden component, wherein the apparatus (13) has a first side (4), which first side (4) is provided for contact with the wooden component, and wherein the apparatus (13) further comprises a predeterminable plurality of breakthroughs (5), wherein the apparatus (13) is formed as a connection element (1, 11) of a releasable plug connection formed in the manner of a tongue-and-groove connection, wherein the connection element (1, 11) comprises a plug connection part (3) on a second side (2), **characterized in that** the first side (4) has a substantially flat or planar basic shape whose surface has a plurality of protruding penetration elements (12), which are formed in such a way that, when the connection element (13) is fixed to a wooden component, they penetrate the wooden component for forming an interlocking connection, and that the penetration elements (12) are formed in the manner of a periodic sawtooth or triangular function.

2. An apparatus (13) according to claim 1, **characterized in that** the penetration elements (12) are formed as tips and/or wedges (6).

3. An apparatus (13) according to claim 1 or 2, **characterized in that** the apparatus (13) has a main loading direction (7), and that the penetration elements (12) are arranged at an angle of between 45° and 90° in relation to the main loading direction (7).

4. An apparatus (13) according to claim 1, 2 or 3, **characterized in that** the penetration elements (12) have legs (8, 9) of different length in the main loading direction (7).

5. An apparatus (13) according to claim 3 or 4, **characterized in that** in the main loading direction (7) the first leg (8) of a tip and/or edge (6) is longer than the subsequent second leg (9) of the same tip or edge (6).

6. An apparatus (13) according to one of the claims 1 to 5, **characterized in that** the first side (4) has a substantially planar basic shape, from which the penetration elements (12) rise up.

7. An apparatus (13) according to one of the claims 1 to 6, **characterized in that** the penetration elements (12) are formed with sharp edges.

8. An apparatus (13) according to one of the claims 1 to 7, **characterized in that** the penetration elements (12) are arranged in a substantially regular manner on the first side (4).

## Revendications

1. Dispositif (13) à disposer sur un composant en bois, lequel dispositif (13) présente un premier côté (4), lequel premier côté (4) est conformé pour venir en contact avec l'élément en bois, et lequel dispositif (13) présente en outre un nombre pouvant être prédéterminé de découpes (5), le dispositif (13) étant conçu comme un élément d'assemblage (1, 11) d'un assemblage emboîté à la manière d'un joint à rainure et languette, l'élément d'assemblage (1, 11) présentant sur un côté (2) un élément d'assemblage emboîté (3), **caractérisé en ce que** le premier côté (4) présente une forme en plan sensiblement plate ou plane, dont la surface présente de nombreux éléments de pénétration (12) en saillie conformés de telle manière que, lorsque l'élément d'assemblage (13) est fixé sur un composant en bois, ils pénètrent dans le composant en bois pour former un assemblage par engagement positif, et **en ce que** les éléments de pénétration (12) sont conformés suivant une fonction périodique en dents de scie ou triangulaire.

2. Dispositif (13) selon la revendication 1, **caractérisé en ce que** les éléments de pénétration (12) sont conformés comme des pointes et/ou des coins (6).

3. Dispositif (13) selon la revendication 1 ou 2, **caractérisé en ce que** le dispositif (13) présente une direction principale de mise en charge (7) et **en ce que** les éléments de pénétration (12) sont disposés selon un angle de 45° à 90° par rapport à la direction principale de mise en charge (7).

4. Dispositif (13) selon la revendication 1, 2 ou 3, **caractérisé en ce que** les éléments de pénétration (12) présentent dans la direction principale de mise en charge (7) des bras (8, 9) de longueur différente.

5. Dispositif (13) selon la revendication 3 ou 4, **caractérisé en ce que** le premier bras (8) d'une pointe et/ou d'une arête (6) est plus long dans la direction principale de mise en charge (7) que le deuxième bras (9) de la même pointe ou arête (6) qui lui fait suite.

6. Dispositif (13) selon l'une des revendications 1 à 5, **caractérisé en ce que** le premier côté (4) présente une forme en plan sensiblement plane, à partir de laquelle s'élèvent les éléments de pénétration (12).

7. Dispositif (13) selon l'une des revendications 1 à 6, **caractérisé en ce que** les éléments de pénétration (12) sont conformés avec des arêtes vives.

8. Dispositif (13) selon l'une des revendications 1 à 7, **caractérisé en ce que** les éléments de pénétration (12) sont disposés de façon sensiblement régulière sur le premier côté (4).
